# EUROPEAN PATENT SPECIFICATION

(11) **EP 3 291 115 B1**
(45) Date of publication and mention of the grant of the patent: **30.09.2020**
(21) Application number: 17186932.4
(22) Date of filing: 18.08.2017
(51) Int. Cl.: G06F 21/62, G06F 21/31, G09B 21/00, H04N 1/00, H04N 1/44, H04L 29/06, G10L 17/00

(54) **INFORMATION PROCESSING APPARATUS, INFORMATION PROCESSING SYSTEM, INFORMATION PROCESSING METHOD, AND COMPUTER READABLE DATA CARRIER TO ASSIST VISUALLY IMPAIRED PEOPLE**
INFORMATIONSVERARBEITUNGSVORRICHTUNG, INFORMATIONSVERARBEITUNGSSYSTEM, INFORMATIONSVERARBEITUNGSMETHODE UND COMPUTERLESEBARE DATENTRÄGER ZUR UNTERSTÜTZUNG VISUELL BEEINTRÄCHTIGTEN PERSONEN
APPAREIL DE TRAITEMENT D'INFORMATIONS, SYSTÈME DE TRAITEMENT D'INFORMATIONS, PROCÉDÉ DE TRAITEMENT D'INFORMATIONS ET PORTEUR DE DONNÉES LISIBLES POUR ORDINATEUR POUR AIDER LES PERSONNES AYANT UNE DÉFICIENCE VISUELLE

(30) Priority: 30.08.2016 JP 2016168528
(43) Date of publication of application: 07.03.2018
(73) Proprietor: Ricoh Company, Ltd., Tokyo 143-8555 (JP)
(72) Inventor: TANIZAKI, Tomoya, Ohta-ku, Tokyo 143-8555 (JP)
(74) Representative: Watkin, Timothy Lawrence Harvey

(56) References cited:
- WO-A1-2014/028797
- US-A1- 2009 204 411

## Description

### BACKGROUND OF THE INVENTION

### Field of the Invention

The present invention relates to an information processing apparatus, an information processing system, an information processing method, and carrier means.

### Description of the Related Art

Conventional screen readers read aloud machine operation information to assist visually impaired people such as people with low vision, color blindness, and total blindness in operating the machine. The machine operation information is information being read aloud through which a visually impaired person operates the machine. The operation information includes information instructing how to use the machine and text information displayed on a display screen of the machine, for example. An administrator of the machine enables the screen reader of the machine in advance, so that the machine operation information is read aloud, enabling even a visually impaired person with total blindness to operate the machine.

Some image processing apparatus executes processing in a dedicated display mode corresponding to the degree of disability such as a healthy person, a moderately disabled person, and a severely visually impaired person. At the time of authentication processing, such an image processing apparatus displays a password input screen with good visibility for a moderately disabled person, while skipping the password input processing for a severely visually impaired person. Through such authentication processing, the image processing apparatus is activated in the dedicated display mode adapted to the visually impaired person such as with low vision or color blindness, and executes the processing under the restriction of predetermined security related functions (JP-2007-28202-A).

US 2009/204411 A1 discloses an image processing apparatus and a voice assistance method capable of giving by voice, information such as operations and statuses of the apparatus itself.

However, while the setting of the screen reader remains enabled in the machine shared by a plurality of users, the operation information is disadvantageously read aloud even when a user who does not need the operation information to be read aloud uses the machine.

In view of the above, an object of the present invention is to provide an information processing apparatus, capable of reading aloud operation information, only when a user who needs the operation information to be read aloud operates a machine.

According to one aspect of the present invention, an information processing apparatus for controlling a screen reader in accordance with claim 1 is provided.

According to one aspect of the present invention, there is provided an information processing method performed by the above-described information processing apparatus, and carrier means such as a recording medium storing a computer program code for causing a computer to operate as the above-described information processing apparatus.

According to one or more embodiments of the present invention, there is an effect that operation information is read aloud only when a user who needs the operation information to be read aloud is operating the machine.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is an external configuration view of a multifunction peripheral (MFP) illustrated as an example of an information processing system according to a first embodiment;
FIG. 2 is a diagram of an exemplary hardware configuration of the MFP;
FIG. 3 is a diagram of exemplary main functions relating to settings of a screen reader among various functions performed by an operation panel;
FIG. 4 is a diagram of an exemplary data configuration of a screen reader setting table;
FIG. 5 is a diagram of an exemplary data configuration of an authentication table;
FIG. 6 is a diagram of an exemplary processing procedure for activating the screen reader;
FIG. 7 is a diagram of an exemplary processing procedure with personal setting information in the screen reader setting table set to "disabled";
FIG. 8 is a diagram of an exemplary processing procedure for returning a mode setting of the screen reader from "enabled" to "disabled" in the operation panel;
FIGS. 9A and 9B are views of exemplary screen configurations of a user interface (UI) screen of the operation panel when the mode setting of the screen reader is "disabled" and "enabled", respectively;
FIG. 10 is a diagram of an exemplary processing procedure in an operation panel according to a second embodiment;
FIG. 11 is a diagram of exemplary main functions relating to settings of a screen reader according to a third embodiment;
FIG. 12 is a diagram of an exemplary data configuration of a screen reader setting table;
FIG. 13 is a diagram of an exemplary processing procedure for activating the screen reader; and
FIG. 14 is a diagram of an exemplary processing procedure for pausing a screen reader according to a fourth embodiment.

The accompanying drawings are intended to depict embodiments of the present invention and should not be interpreted to limit the scope thereof. The accompanying drawings are not to be considered as drawn to scale unless explicitly noted.

### DETAILED DESCRIPTION OF THE INVENTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the accompanying drawings, an information processing apparatus, an information processing system, and a program according to embodiments of the present invention will be described in detail.

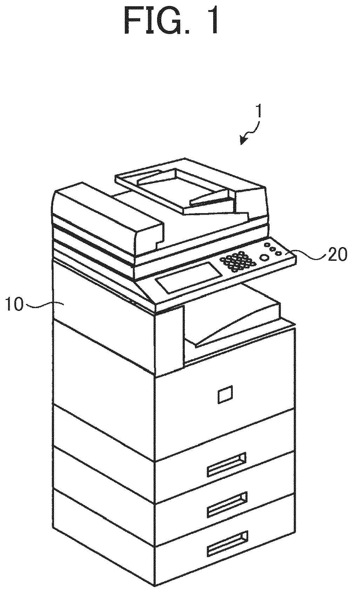

FIG. 1 is an external configuration view of an MFP illustrated as an example of the "information processing system" according to the present embodiment. The MFP is an apparatus including two or more different functions among a plurality of functions such as a copy function, a scanner function, a printer function, and a fax function. The information processing system is not limited to an apparatus including two or more different functions like this MFP, but may be a printer apparatus or the like including a single function. An MFP 1 illustrated in FIG. 1 includes a copy function, a scanner function, and a printer function, as an example.

The MFP 1 includes a main unit 10 and an operation panel 20. The main unit 10, which is an example of an "image processing apparatus", includes an image processing unit and an image forming unit, for example. The image processing unit performs copying, scanning, and the like. The image forming unit ejects liquid to form an image. The main unit 10 receives an operation instruction from the outside, and controls the image processing unit, the image forming unit, and the like according to the operation instruction.

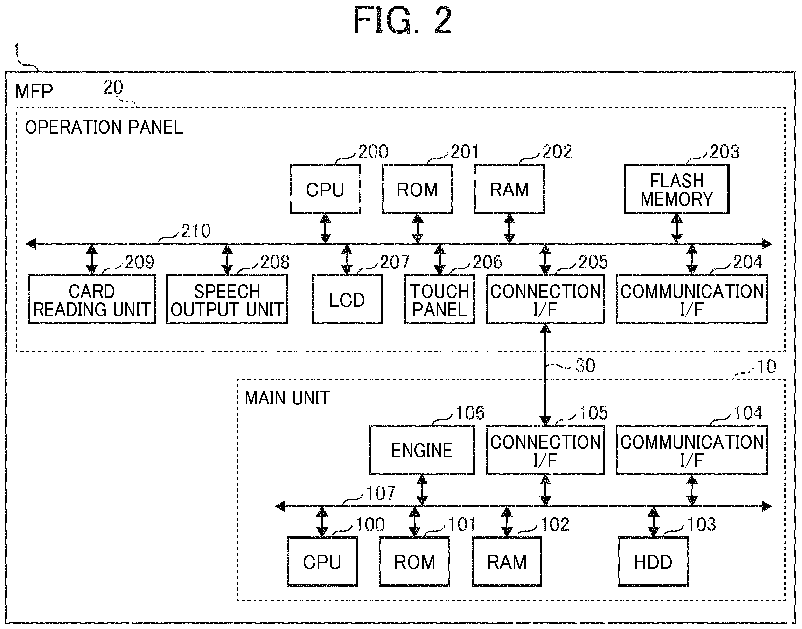

The operation panel 20 is illustrated as an example of the "information processing apparatus" according to the present embodiment. The operation panel 20 serves as a user interface which allows a user to set and operate the main unit 10. The main unit 10 and the operation panel 20 are connected via wired or wireless communication, and transmit and receive operation instructions, data, and the like via a communication path 30 (refer to FIG. 2). The user transmits an operation instruction to the main unit 10 through the operation panel 20, following which the main unit 10 receives the operation instruction and executes image processing and image forming processing accordingly.

(Hardware Configuration) FIG. 2 is a diagram of an exemplary hardware configuration of the MFP 1. As illustrated in FIG. 2, the main unit 10 includes a central processing unit (CPU) 100, a read only memory (ROM) 101, a random access memory (RAM) 102, a hard disk drive (HDD) 103, a communication interface (I/F) 104, a connection I/F 105, and an engine 106. The units are mutually coupled via a system bus 107.

The CPU 100 is a central processing unit which executes calculation processing and control processing. The CPU 100 reads various programs stored in the ROM 101, the HDD 103, and the like to the RAM 102 and executes, for example, the calculation processing and control processing to perform overall control of the main unit 10.

The ROM 101 is a nonvolatile memory which stores a fixed program (e.g., basic input/output system (BIOS)). The RAM 102 is a volatile memory that the CPU 100 uses as a work area or the like during various processing. The HDD 103 is an auxiliary storage device which stores an operating system (OS), an app program, large-capacity data, and the like. In this specification, the term "app" refers to "application".

The communication I/F 104 is an interface (e.g., an Ethernet (registered trademark) board) for connecting the main unit 10 to a communication network such as a local area network (LAN) or a virtual private network (VPN).

The connection I/F 105 is an interface, such as the universal serial bus (USB) standard, which connects to the operation panel 20 through communication via the communication path 30. The connection with the operation panel 20 is not limited to the USB. Furthermore, the communication path 30 is not limited to a wired connection, and may be a wireless connection.

The engine 106 includes an image processing controller, a scanner, and a plotter, for example. The scanner scans and reads a document. The plotter prints on a recording medium such as a piece of paper.

The operation panel 20 illustrated in FIG. 2 includes a CPU 200, a ROM 201, a RAM 202, a flash memory 203, a communication I/F 204, a connection I/F 205, a touch panel 206, a liquid crystal display (LCD) 207, a speech output unit 208, and a card reading unit 209. The units are mutually coupled via a system bus 210.

The CPU 200 is a central processing unit which executes calculation processing and control processing. The CPU 200 reads various programs stored in the ROM 201, the flash memory 203, and the like to the RAM 202 and executes, for example, the calculation processing and control processing to perform overall control of the entire operation panel 20.

The ROM 201 is a nonvolatile memory which stores a fixed program (e.g., BIOS). The RAM 202 is a volatile memory that the CPU 200 uses as a work area or the like during various processing. The flash memory 203 is an auxiliary storage device which stores an OS, an app program, large-capacity data, and the like.

The communication I/F 204 is an interface (e.g., an Ethernet card) for connecting the operation panel 20 to a communication network such as a LAN or a VPN.

The connection I/F 205 is an interface, in compliance with the USB standard, which connects to the main unit 10 through communication via the communication path 30. The connection with the main unit 10 is not limited to the USB. Furthermore, the communication path 30 is not limited to a wired connection, and may be a wireless connection.

The touch panel 206 is an input device which detects a position touched by an operator on a screen of the LCD 207 and notifies the CPU 200 of information on the detected touch position. Besides the touch panel 206, a hardware key or the like may be provided as the input device.

The LCD 207 is an example of a display which includes a liquid crystal display screen and displays, on the display screen, screen information output to the LCD 207 by the CPU 200. The display may employ an organic electroluminescence (EL), a light emitting diode (LED), a lamp, or the like other than the liquid crystal.

The speech output unit 208 includes a digital-to-analog (D/A) conversion circuit, an amplifier, and a speaker, for example. The speech output unit 208 converts a digital speech signal output from the CPU 200 into an analog speech signal and amplifies the converted analog speech signal to propagate as speech from the speaker into the air.

The card reading unit 209 is a card reading device which reads authentication information from a personal identification card. The personal identification card stores the authentication information. Examples of the personal identification card include a magnetic card and an integrated circuit (IC) card.

(Functional Configuration) In the information processing system according to the present embodiment, the main unit 10 and the operation panel 20 operate with the operating systems different from each other. The operation panel 20 performs command communication to the main unit 10 so that the operation panel 20 can use the functions of the main unit 10.

The functional configuration of the operation panel 20 will now be described. The CPU 200 reads a predetermined program stored in the ROM 201, the flash memory 203, or the like to the RAM 202 and executes the program, through which the operation panel 20 performs various functions for information processing.

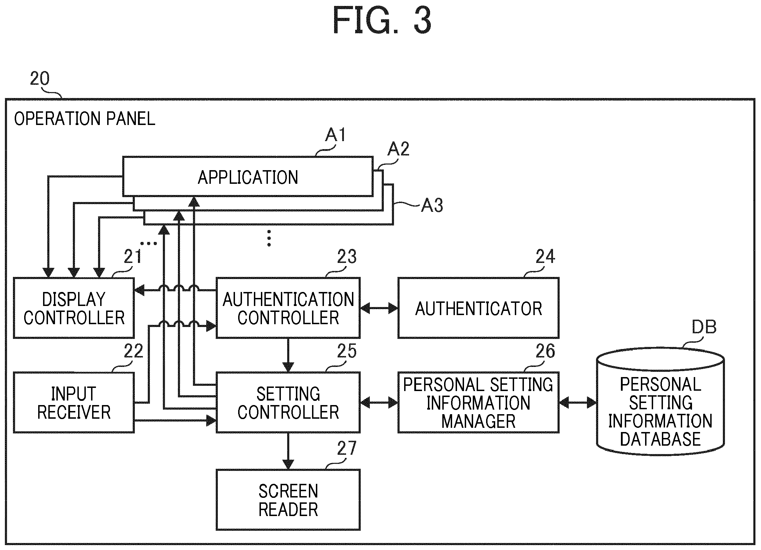

FIG. 3 is a diagram of exemplary main functions relating to settings of the screen reader among various functions performed by the operation panel 20. As illustrated in FIG. 3, the operation panel 20 includes, as the main functions relating to the settings of the screen reader, a display controller 21, an input receiver 22, an authentication controller 23, an authenticator 24, a setting controller 25, a personal setting information manager 26, and a screen reader 27. These elements are implemented by software installed on the operation panel 20, for example.

The display controller 21 controls the display of the LCD 207.

The input receiver 22 receives input information input from the touch panel 206, the card reading unit 209, or the like. For example, when the input receiver 22 receives authentication information of a user as the input information from the touch panel 206, the card reading unit 209, or the like, the input receiver 22 passes the authentication information to the authentication controller 23. When the input receiver 22 receives personal setting information on the screen reader 27 from the touch panel 206 or the like, the input receiver 22 passes the personal setting information to the setting controller 25. The "personal setting information" includes a personal setting indicating whether the screen reader 27 is enabled or disabled.

The authentication controller 23 controls the authentication procedure. For example, the authentication controller 23 passes the authentication information of the user received from the input receiver 22 to the authenticator 24, and acquires the result of the authentication processing from the authenticator 24.

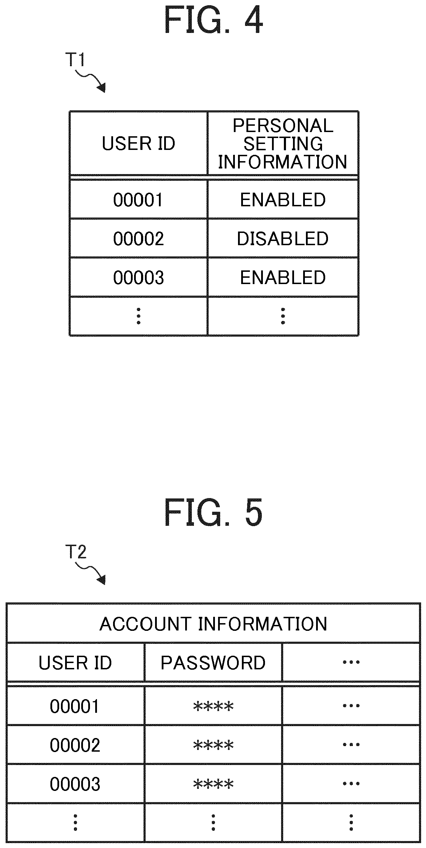

The authenticator 24 performs the authentication processing. Specifically, the authenticator 24 compares the authentication information passed from the authentication controller 23 with account information in an authentication table T2 (refer to FIG. 5) to perform the authentication processing, and returns the result of the authentication processing to the authentication controller 23.

In the present embodiment, the authenticator 24 is provided inside the operation panel 20, but is not limited inside the operation panel 20. The authenticator 24 may be provided in the main unit 10 or a computer on the communication network. In this case, the authentication controller 23 requests the main unit 10 or the computer on the communication network to authenticate the authentication information via the connection I/F 205 or the communication I/F 204, and then acquires the result of the authentication processing from the request destination.

The setting controller 25 performs control such as change of the setting of the screen reader 27. When the setting controller 25 changes the setting of the screen reader 27, the setting controller 25 accesses each function, an app A1, an app A2, an app A3, ...and the like.

The personal setting information manager 26 manages a personal setting information database DB including a screen reader setting table T1 (refer to FIG. 4) and the like. Specifically, the personal setting information manager 26 performs operation processing (extraction, registration for saving, update, and deletion) for data such as personal setting information for various tables.

The screen reader 27 converts text information to be read aloud into speech information and causes the speech output unit 208 to output the converted information as speech. For example, when a menu selection screen is displayed on the LCD 207, the screen reader 27 causes the speech output unit 208 to output operation instruction information on the menu selection screen as speech. Furthermore, when a touch operation, a key operation, or the like is performed while the operation screen is displayed, the screen reader 27 detects the position focused by the operation on the operation screen, and causes the speech output unit 208 to output the information at the focus position to be read aloud as speech.

In the present embodiment, the display controller 21 and the input receiver 22 receive inputs. The setting controller 25 controls the setting. The personal setting information manager 26 and the screen reader setting table T1 (refer to FIG. 4) manage the personal setting information.

(Data Configuration) FIG. 4 is a diagram of an exemplary data configuration of the screen reader setting table. The screen reader setting table T1 illustrated in FIG. 4 stores a user ID and personal setting information to correspond to each other. The user ID is user identification information for uniquely identifying a user of the MFP 1, and is a unique code, for example. In the present embodiment, the personal setting information is information indicating the personal setting of "enabled" which enables the screen reader 27 or "disabled" which disables the screen reader 27.

FIG. 5 is a diagram of an exemplary data configuration of the authentication table. The authentication table T2 illustrated in FIG. 5 stores account information issued from the main unit 10 or the like as the user of the MFP 1. In the present embodiment, the user ID used for the login authentication and included in the account information in the authentication table T2 is used as the user ID to be set in the screen reader setting table T1.

(Processing Procedure) Next, the processing procedure for activating the screen reader 27 in the operation panel 20 will be described. It is to be noted that the description on the processing prior to the activation of the screen reader 27 will be omitted. The omitted processing includes, for example, activation processing for activating the operation panel 20 and the main unit 10 and communication establishment processing for establishing communication between the operation panel 20 and the main unit 10 through the communication path 30.

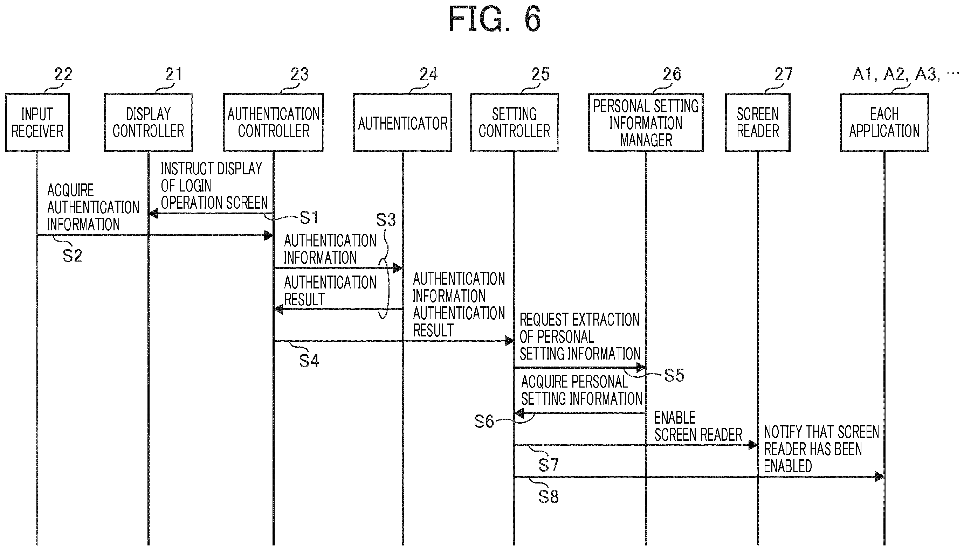

FIG. 6 is a diagram of an exemplary processing procedure for activating the screen reader 27. The CPU 200 reads a predetermined program stored in the ROM 201, the flash memory 203, or the like to the RAM 202 to execute the program and activate the screen reader 27 according to the following procedure.

After the communication between the operation panel 20 and the main unit 10 is established, the authentication controller 23 instructs the display controller 21 to display a login operation screen (S1). For example, the authentication controller 23 instructs the display controller 21 to display the login operation screen, for example, immediately after the communication is established or when a touch operation by an operator is detected.

Subsequently, the authentication controller 23 receives authentication information from the input receiver 22 (S2). For example, when the user inputs the authentication information via the touch panel 206 or the like, the authentication controller 23 receives the input authentication information from the input receiver 22. Alternatively, when the user causes the card reading unit 209 to read the authentication information included in the personal identification card, the authentication controller 23 receives the read authentication information which has been read by the card reading unit 209 from the input receiver 22. For a person with total blindness, the latter authentication method may be desirable. That is, the person with total blindness is given the personal identification card in advance, and the card reading unit 209 reads the authentication information included in the personal identification card.

Subsequently, the authentication controller 23 passes the authentication information received from the input receiver 22 to the authenticator 24, and acquires, from the authenticator 24, the result of the authentication processing performed by the authenticator 24 on the basis of the authentication information (S3).

Subsequently, the authentication controller 23 notifies the setting controller 25 of the result of the authentication processing acquired from the authenticator 24 (S4).

When the result of the authentication processing notified by the authentication controller 23 indicates authentication completion, the setting controller 25 requests the personal setting information manager 26 to extract personal setting information corresponding to the authentication information (user ID) (S5). In response, the personal setting information manager 26 accesses the personal setting information database DB to extract the personal setting information corresponding to the above-described user ID in the screen reader setting table T1.

The setting controller 25 acquires, from the personal setting information manager 26, the personal setting information extracted from the screen reader setting table T1 as a response to the request (S6).

Subsequently, when the personal setting information acquired from the personal setting information manager 26 indicates "enabled", the setting controller 25 changes the mode setting ("disabled" by default) for enabling or disabling the screen reader 27 to "enabled" (S7). It is assumed that the personal setting information in the screen reader setting table T1 is preliminarily set to "enabled" for a person who needs the screen reader, such as a person with total blindness.

Furthermore, the setting controller 25 notifies each app (the app A1, the app A2, the app A3, ...) that the mode setting of the screen reader 27 has been changed to "enabled" (S8).

Through the above processing procedure, the mode setting of the screen reader 27 is changed to "enabled" and the operation panel 20 activates the screen reader 27 to start reading the operation information aloud. When each app has a function restriction by the screen reader 27, the operation of each app is partially restricted.

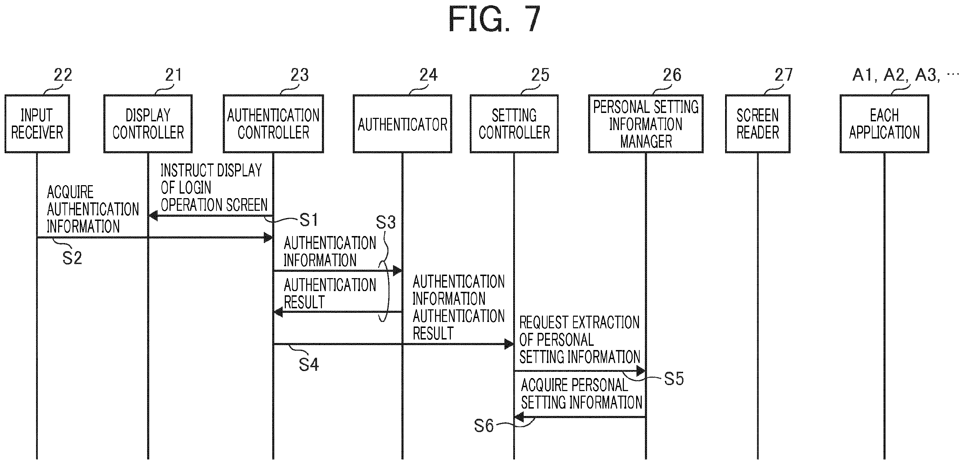

FIG. 7 is a diagram of an exemplary processing procedure with the personal setting information in the screen reader setting table T1 set to "disabled", that is, the setting in which the screen reader 27 is not used. In FIG. 7, similar steps to FIG. 6 are denoted by identical reference numerals.

For the setting in which the screen reader 27 is not used, the following processing is performed after steps S1 to S6 which are similar to FIG. 6. Since the personal setting information acquired from the personal setting information manager 26 indicates "disabled", the setting controller 25 skips the procedure in step S7 and step S8 illustrated in FIG. 6. Accordingly, the mode setting of the screen reader 27 remains in the default "disabled" state so that the operation information is not read aloud and the function restriction of each application is not executed.

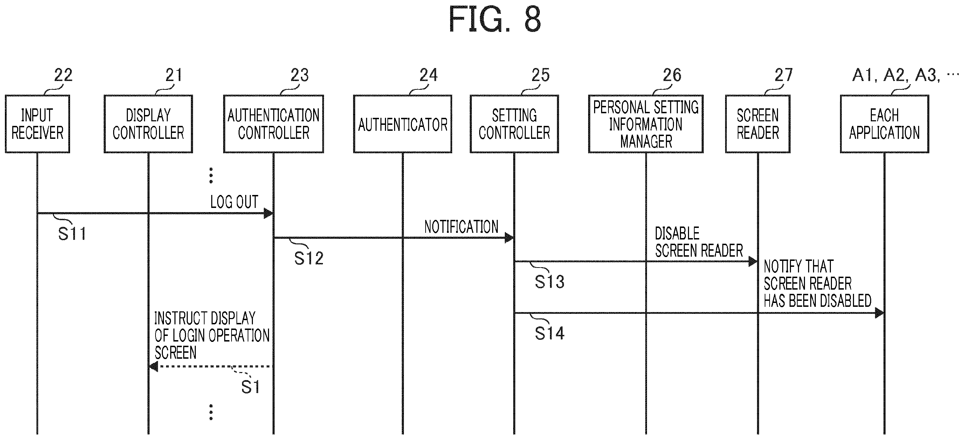

FIG. 8 is a diagram of an exemplary processing procedure for returning the mode setting of the screen reader 27, which has been changed to "enabled" in the operation panel 20, to "disabled". In the present embodiment, processing at the logout processing is described. This logout processing is performed after a series of operation processing that has started with the login processing by the user. It is to be noted that the timing of returning the mode setting to "disabled" is not limited to this timing. The timing may be appropriately determined. For example, the mode setting may be returned to "disabled" during the series of operation processing that has started with the login processing by the user.

The authentication controller 23 receives a logout operation input by the user from the input receiver 22 (S11).

Then, the authentication controller 23 notifies the setting controller 25 that the logged-in user has performed the logout operation (S12).

Subsequently, the setting controller 25 changes the mode setting of the screen reader 27 to "disabled" (S13).

Then, the setting controller 25 notifies each app that the mode setting of the screen reader 27 has been changed to "disabled" (S14).

Through the above processing procedure, the mode setting of the screen reader 27 which has been "enabled" is returned to "disabled". Accordingly, during a period in which a user who does not need the screen reader 27 subsequently logs in and operates, the function of the screen reader 27 is disabled and the operation information is not read aloud. During this period, the function restriction by the screen reader 27 is canceled, and each app can be operated in a normal state.

(Screen Configuration) The following describes a difference in the screen configuration of a UI screen of the operation panel 20 when the mode setting of the screen reader 27 is "disabled" and "enabled". Some of the functions in apps do not support the function that reads aloud the operation instructions for a user who needs the screen reader function. Accordingly, the operation panel 20 performs disabling processing, for example hiding some of operating elements such as icons and buttons. Through this processing, the operator cannot select the functions which are not available while the screen reader 27 is enabled.

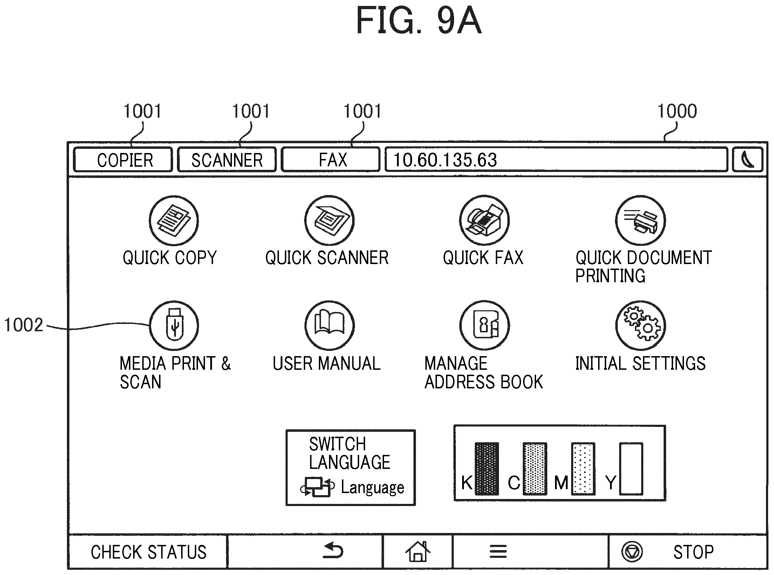

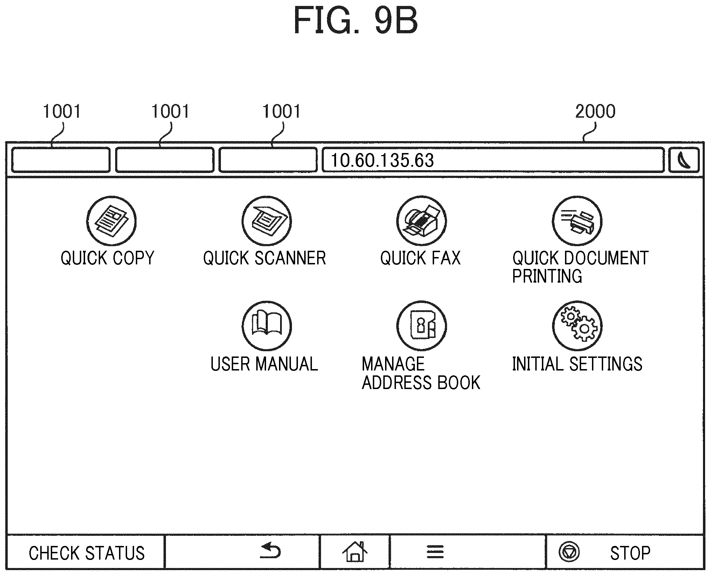

FIGS. 9A and 9B are views of exemplary screen configurations of the UI screen of the operation panel 20 when the mode setting of the screen reader 27 is "disabled" and "enabled", respectively. FIG. 9A illustrates the screen when the mode setting of the screen reader 27 is "disabled". FIG. 9B illustrates the screen when the mode setting of the screen reader 27 is "enabled".

A UI screen 1000 illustrated in FIG. 9A includes, for example, function keys 1001, such as a copier and a scanner, and icons 1002. The icons 1002 causes execution of processing of preliminarily registered procedures such as copying processing and scanning processing.

A UI screen 2000 illustrated in FIG. 9B is a screen in which through disabling processing, the function keys 1001 and the icon 1002 for media print & scan on the UI screen 1000 illustrated in FIG. 9A are hidden, for example. Through this disabling processing, the operator cannot select the functions that do not support the screen reader 27.

The function keys 1001 and the icon 1002 subjected to the disabling processing are just examples. Depending on the setting of the home screen, the disabling processing may be performed on different functions.

In the first embodiment, a description has been given of the aspect in which the mode setting of the screen reader 27 is "disabled" by default. Alternatively, the mode setting may be "enabled" by default. In this case, when a user whose personal setting information in the screen reader setting table T1 is set to "disabled" logs in, the setting controller 25 changes the mode setting of the screen reader 27 from "enabled" to "disabled". The setting controller 25 also notifies each app that the mode setting of the screen reader 27 has been changed to "disabled", whereby each app cancels the function restriction.

In the first embodiment, the mode setting of the screen reader 27 is returned to "disabled" at logout, but this processing may be omitted.

In the first embodiment, furthermore, a description has been given of the aspect which provides the display controller 21, the input receiver 22, the authentication controller 23, the authenticator 24, the setting controller 25, the personal setting information manager 26, and the screen reader 27 in the operation panel 20 exemplified as the information processing apparatus. However, the place in which these functions are provided is not limited to the operation panel 20. Some of these functions may be provided in the main unit 10 or another device on the communication network. For example, the authenticator 24 may be provided in the main unit 10 or another device on the communication network. Furthermore, the screen reader 27 may be provided in the main unit 10.

In the first embodiment, a description has been given of an embodiment of the "information processing apparatus" in which the operation panel 20 in the information processing system including the main unit 10 and the operation panel 20 connected through communication serves as the example. However, the embodiment of the "information processing apparatus" is not limited to the operation panel 20. The "information processing apparatus" may be a standalone terminal, such as a smartphone, a tablet terminal, or a kiosk terminal.

According to the first embodiment, as described above, the operation information is read aloud when the user who needs the operation information to be read aloud operates the machine.

Furthermore, the disabling processing is performed on some of the functions in the UI screen so that the operator cannot select the functions unavailable when the screen reader 27 is enabled. Such a configuration can reduce the chance of transitioning to the functions which do not support the screen reader 27 and falling into an inoperable state.

(Second Embodiment) In the first embodiment, a description has been given of the aspect in which, preliminarily, the personal setting information for a person who needs the screen reader 27 is set to "enabled" in the screen reader setting table T1, while the personal setting information for a person who does not need the screen reader 27 is set to "disabled" in the screen reader setting table T1. In the second embodiment, a description is given of an aspect which updates the personal setting information from the setting which does not use the screen reader 27 to the setting which uses the screen reader 27. The operation is performed by a person with total blindness, as an example.

The following describes main points different from the points in the first embodiment, and omits description common to the first embodiment as appropriate.

In the second embodiment, for example, an editing screen for editing personal setting information is provided on a tab or the like in an operation screen. The editing screen includes an instruction button for instructing the setting change of the personal setting information from "disabled" to "enabled" or from "enabled" to "disabled". The processing procedure using the editing screen will be described below.

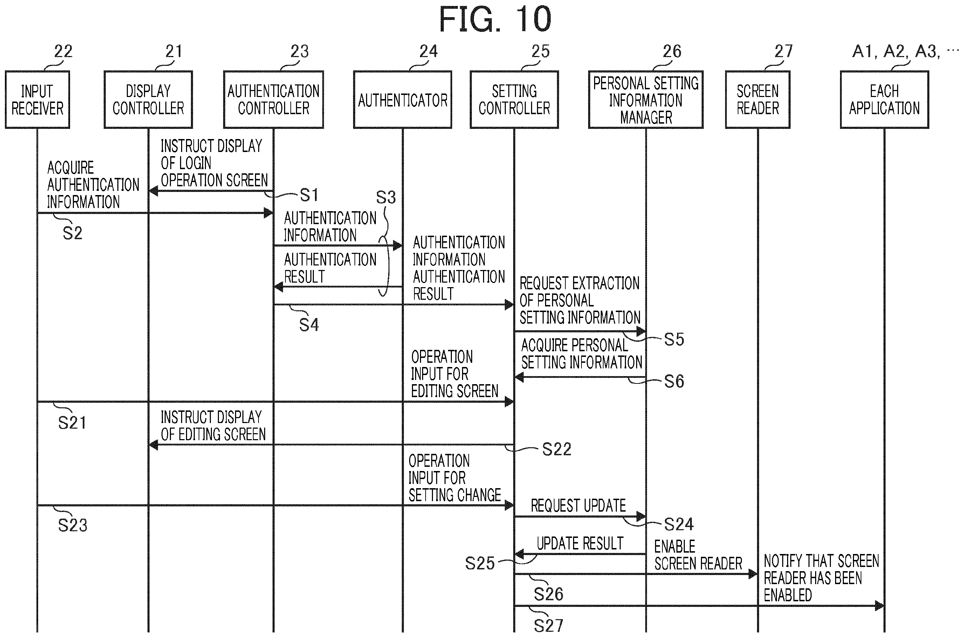

(Processing Procedure) FIG. 10 is a diagram of an exemplary processing procedure in the operation panel 20 when a person with total blindness updates the personal setting information in the screen reader setting table T1 (refer to FIG. 4) from "disabled" to "enabled" in the operation panel 20.

The operation panel 20 executes the procedure in steps S1 to S6 (refer to FIG. 7) described in the first embodiment in response to the operation by the person with total blindness. With the personal setting information "disabled", the screen reader 27 is not activated. After step S6, therefore, the administrator of the machine operates the operation panel 20 on behalf of the person with total blindness, through which the operation panel 20 executes processing in the following procedure.

When the setting controller 25 receives, from the input receiver 22, an operation input instructing the display of the editing screen for the personal setting information (S21), the setting controller 25 instructs the display controller 21 to display the editing screen for the personal setting information(S22).

When the setting controller 25 receives an operation input instructing the change of the personal setting information from "disabled" to "enabled" from the input receiver 22 (S23), the setting controller 25 requests the personal setting information manager 26 to update the personal setting information of the person with total blindness from "disabled" to "enabled" (S24). Specifically, the setting controller 25 requests the personal setting information manager 26 to update the personal setting information corresponding to the authentication information (user ID) of the person with total blindness from "disabled" to "enabled" in the screen reader setting table T1.

The personal setting information manager 26 updates the personal setting information corresponding to the authentication information (user ID) of the person with total blindness from "disabled" to "enabled" in the screen reader setting table T1, and passes the result of the update to the setting controller 25 as a response (S25).

The setting controller 25 receives the result of the update from the personal setting information manager 26 as a response, and changes the mode setting of the screen reader 27 from "disabled" to "enabled" (S26).

Then, the setting controller 25 notifies each app that the mode setting of the screen reader 27 has been changed to "enabled" (S27).

Through the above processing procedure, the person with total blindness switches the mode setting of the screen reader 27 from "disabled" to "enabled" with the assistance of the administrator of the machine for the first time. Later on, the person with total blindness operates the machine by himself or herself based on the operation information being read aloud.

With the configuration above, the personal setting information for the screen reader 27 can be changed later.

(Third Embodiment) In the third embodiment, a description is given of an aspect in which a language used when the screen reader 27 reads a text aloud can be specified from a plurality of languages.

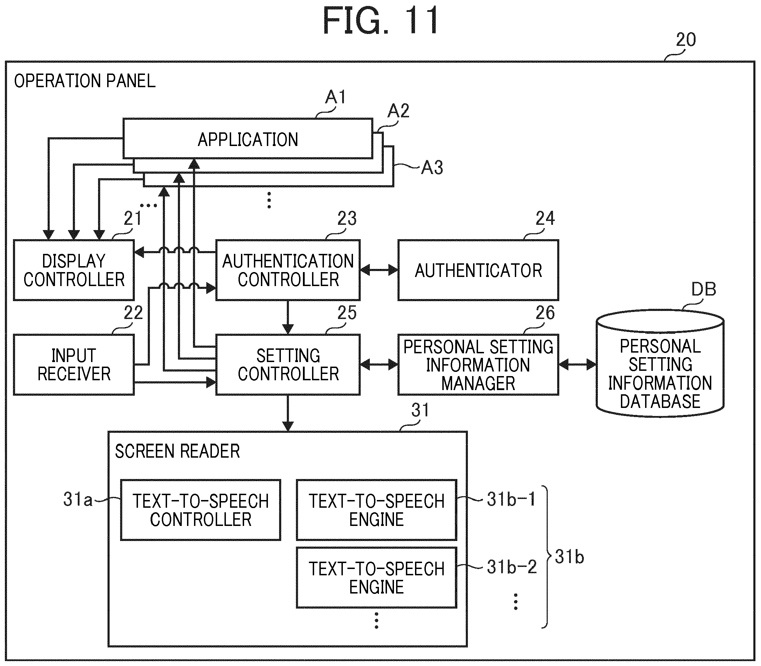

(Functional Configuration) FIG. 11 is a diagram of exemplary main functions relating to settings of a screen reader according to the third embodiment. A screen reader 31 illustrated in FIG. 11 includes a text-to-speech controller 31a and a text-to-speech engine 31b including a plurality of text-to-speech engines (a text-to-speech engine 31b-1, a text-to-speech engine 31b-2, ...). The text-to-speech engine 31b-1 and the text-to-speech engine 31b-2 are examples of a "speech output engine".

The text-to-speech controller 31a controls on and off of reading aloud a text depending on whether the mode setting of the screen reader 31 is "enabled" or "disabled".

The text-to-speech engine 31b include text-to-speech engines for different languages such as the text-to-speech engine 31b-1 and the text-to-speech engine 31b-2. By using one of the text-to-speech engines for different languages, the text-to-speech engine 31b converts operation information such as text information to read aloud into speech information and causes the speech output unit 208 to output the operation information as speech.

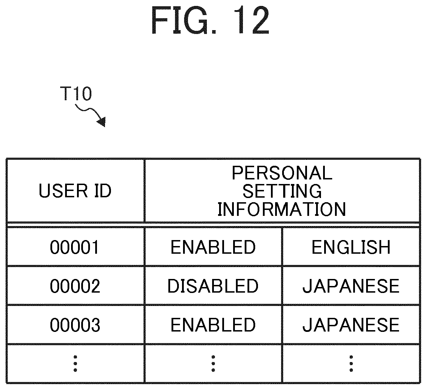

FIG. 12 is a diagram of an exemplary data configuration of a screen reader setting table according to the third embodiment. A screen reader setting table T10 illustrated in FIG. 12 includes language setting information in addition to the personal setting information included in the screen reader setting table T1 (refer to FIG. 4). The language setting information is information indicating the languages used by the users, such as Japanese and English.

(Processing Procedure) A processing procedure for activating the screen reader 31 will be described.

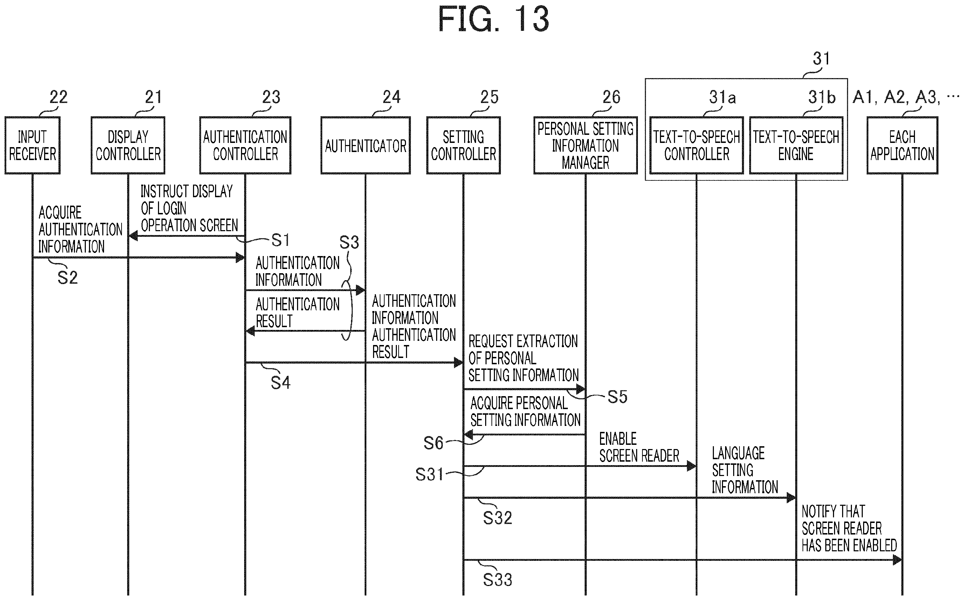

FIG. 13 is a diagram of an exemplary processing procedure for activating the screen reader 31. Similar to the first embodiment, the operation panel 20 executes the procedure in steps S1 to S6 (refer to FIG. 6).

When the personal setting information acquired from the personal setting information manager 26 indicates "enabled", the setting controller 25 changes the mode setting ("disabled" by default) of the screen reader 31 of the text-to-speech controller 31a to "enabled" (S31).

Furthermore, the setting controller 25 outputs the language setting information (the language used by the user) acquired from the personal setting information manager 26 to the text-to-speech engine 31b, causing the text-to-speech engine 31b to use a text-to-speech engine corresponding to the language used by the user (S32).

Furthermore, the setting controller 25 notifies each app (the app A1, the app A2, the app A3, ...) that the mode setting of the screen reader 31 has been changed to "enabled" (S33).

It is assumed that before the above processing, the personal setting information is set to "enabled" and the "language setting information" is specified in the screen reader setting table T10 preliminarily for a person who needs the screen reader 31, such as a person with total blindness.

Through the above processing procedure, when the person who needs the screen reader 31 logs in, the mode setting of the text-to-speech controller 31a is changed to "enabled" and the text-to-speech engine 31b corresponding to the language used by the user is specified. Then, the operation panel 20 starts reading aloud the operation information in the language used by the user. According to the third embodiment, as described above, the screen reader corresponding to the language used by the user can be used.

(Fourth Embodiment) In the fourth embodiment, a description is given of processing through which an operator who is using a screen reader pauses the screen reader. The screen reader according to the fourth embodiment outputs an operation screen of the screen reader to the display controller 21 and detects a push operation on a pause button provided on the operation screen. The setting controller 25 detects information indicating the pause notified by the screen reader. When the operator presses the pause button of the screen reader on the operation screen of the screen reader and the input receiver 22 receives the pause operation, the processing described below starts.

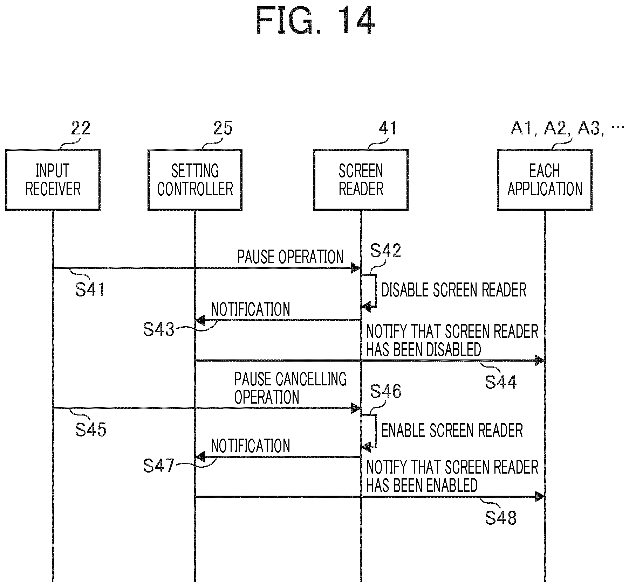

FIG. 14 is a diagram of an exemplary processing procedure through which an operator who is using a screen reader 41 pauses the screen reader 41.

When the input receiver 22 receives a push operation of the pause button of the screen reader 41, the input receiver 22 notifies the screen reader 41 of information indicating the reception of the push operation of the pause button and the screen reader 41 detects the information (S41).

Subsequently, the screen reader 41 changes the mode setting of the screen reader 41 to "disabled" temporarily (S42).

Subsequently, the screen reader 41 notifies the setting controller 25 that the operator has paused the screen reader 41 (S43).

Then, the setting controller 25 notifies each app (the app A1, the app A2, the app A3, ...) that the mode setting of the screen reader 41 has been changed to "disabled" (S44).

The pause cancellation is performed as follows, for example. The screen reader 41 detects that the input receiver 22 has received the push operation of the pause button of the screen reader 41 again (S45).

Subsequently, the screen reader 41 changes the mode setting of the screen reader 41 to "enabled" (S46).

Subsequently, the screen reader 41 notifies the setting controller 25 that the operator has canceled the pause of the screen reader 41 (S47).

Then, the setting controller 25 notifies each app (the app A1, the app A2, the app A3, ...) that the mode setting of the screen reader 41 has been changed to "enabled" (S48).

According to the fourth embodiment, as described above, the screen reader can be paused even while the screen reader is being used. Accordingly, a person with total blindness or the like who is unfamiliar with the use of the screen reader can gain assistance from a healthy person while using the screen reader.

(Fifth Embodiment) As a modified configuration, the reading aloud of the operation information may be output from a headphone. For example, the configuration includes a speech output function in which a stereo mini plug is provided in the speech output unit 208 (refer to FIG. 2). An operator connects a plug of the headphone to the stereo mini plug so that an output destination of an analog speech signal generated by a speech output unit according to the fifth embodiment is switched from the speaker to the headphone.

When the operator touches the screen while the headphone is connected, the authentication controller 23 (refer to FIG. 3) detects the touch operation, and the processing is performed by the procedure in steps S1 to S8 illustrated in FIG. 6 in an operation panel according to the fifth embodiment. After the screen reader is enabled, the operation information is output as speech from the headphone.

The operator may connect the plug of the headphone to the stereo mini plug anytime. For example, after the screen reader is enabled and the speech output starts, the operator may connect the plug of the headphone. In this case, the operation information is output as speech from the headphone after the headphone is connected.

In the configuration described herein, the stereo mini plug is provided in the speech output unit 208 (refer to FIG. 2) to connect the headphone by wire. However, the device to be connected is not limited to the headphone. As a modified configuration, a device (headphone device) that does not leak information being read aloud outside, such as an earphone, may be connected. In addition, the connection with the headphone or the like is not limited to a wired connection, but may be a wireless connection using Bluetooth (registered trademark) communication or the like.

According to the fifth embodiment, as described above, a text being read aloud can be heard through the headphone. Such a configuration can reduce noise to the surrounding people and reduce a risk of privacy-related information being read aloud to the surrounding people.

The programs to be executed by the information processing system according to the present embodiment are recorded and provided as files in an installable or executable form in a computer-readable recording medium such as a compact disk read-only memory (CD-ROM), a flexible disk (FD), a compact disc-recordable (CD-R), or a digital versatile disk (DVD).

Moreover, the programs to be executed by the information processing system according to the present embodiment may be stored on a computer connected to a network such as the Internet and provided through download via the network. In addition, the programs to be executed by the information processing system according to the present embodiment may be provided or distributed via the network such as the Internet.

Furthermore, the programs according to the present embodiment may be preinstalled into a ROM or the like to provide the programs.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. An information processing apparatus (20) for controlling a screen reader (27), wherein the screen reader (27) is operative to convert text information to be read aloud into speech information, and to cause a speech output unit (208) to output the speech information as speech, comprising:
a personal setting information manager (26) configured to manage user identification information identifying a user and personal setting information indicating a personal setting of the screen reader (27) for the user, in association with each other;
an input receiver (22) configured to receive user identification information;
a setting controller (25) configured to enable or disable the screen reader (27) depending on personal setting information associated with the user identification information that is received, wherein enabling or disabling the screen reader (27) corresponds to a setting in which the screen reader (27) is used or is not used, respectively,
and wherein the setting controller (25) activates an application (A1, A2, A3,...) to be read aloud by the screen reader (27), and
when the setting controller (25) enables or disables the screen reader (27), the setting controller (25) notifies the application (A1, A2, A3,...) of information indicating whether the screen reader (27) is enabled or disabled,
wherein, in response to the notification of information indicating that the screen reader (27) is enabled, a function restriction is executed on the application (A1, A2, A3,...), wherein the operation of the application (A1, A2, A3,...) is partially restricted, and
in response to the notification of information indicating that the screen reader (27) is disabled, the function restriction is cancelled from the application (A1, A2, A3,...); and
a UI screen (1000) including function keys for executing processes, wherein, in response to the screen reader (27) being enabled:
(i) function keys corresponding to functions that do not support the screen reader (27) are disabled, whereby the user cannot select the disabled function keys; and
(ii) function keys corresponding to functions that do support the screen reader (27) are not disabled.

2. The information processing apparatus (20) according to claim 1,
wherein when the setting controller (25) detects, from the screen reader (27), information indicating pause of reading aloud, the setting controller (25) further notifies the application (A1, A2, A3,...) of information indicating that the screen reader (27) is disabled.

3. The information processing apparatus (20) according to claim 1,
wherein the setting controller (25) further returns the enabled or disabled screen reader (27) to a previous setting state before the screen reader (27) is enabled or disabled.

4. The information processing apparatus (20) according to claim 3,
wherein when the setting controller (25) returns the screen reader (27) to the previous setting state before the screen reader (27) is enabled or disabled, the setting controller (25) notifies the application (A1, A2, A3,...) of information indicating the setting state.

5. The information processing apparatus (20) according to any one of claims 1 to 4,
wherein the user identification information is used to authenticate login of the user.

6. The information processing apparatus (20) according to any one of claims 1 to 4,
wherein the personal setting information includes used language information indicating a language used by the user, and
when the setting controller (25) enables the screen reader (27), the setting controller (25) specifies a text-to-speech engine for the language corresponding to the used language information of the user among text-to-speech engines included in the screen reader (27).

7. The information processing apparatus (20) according to any one of claims 1 to 4, further comprising:
the speech output unit (208) configured to output speech information to be read aloud by the screen reader (27) to a headphone.

8. The information processing apparatus (20) according to any one of claims 1 to 7, further comprising:
a database (DB) to store the user identification information identifying a user and the personal setting information indicating a personal setting of the screen reader (27) for the user, in association with each other.

9. An information processing system (1), comprising:
the information processing apparatus (20) according to any one of claims 1 to 8; and
an image forming apparatus (30) communicable with the information processing apparatus (20) and configured to perform image formation according to an instruction received from the information processing apparatus (20).

10. An information processing method comprising:
managing user identification information identifying a user and personal setting information indicating a personal setting of the screen reader (27) for the user, in association with each other, wherein the screen reader (27) is operative to convert text information to be read aloud into speech information, and to cause a speech output unit (208) to output the speech information as speech;
receiving user identification information;
determining, by a setting controller (25), whether to enable or disable the screen reader (27) depending on personal setting information associated with the user identification information that is received, wherein enabling or disabling the screen reader (27) corresponds to a setting in which the screen reader (27) is used or is not used, respectively,
and wherein the setting controller (25) activates an application (A1, A2, A3,...) to be read aloud by the screen reader (27), and
when the setting controller (25) enables or disables the screen reader (27), the setting controller (25) notifies the application (A1, A2, A3,...) of information indicating whether the screen reader (27) is enabled or disabled,
wherein, in response to the notification of information indicating that the screen reader (27) is enabled, a function restriction is executed on the application (A1, A2, A3,...), wherein the operation of the application (A1, A2, A3,...) is partially restricted, and
in response to the notification of information indicating that the screen reader (27) is disabled, the function restriction is cancelled from the application (A1, A2, A3,...);
; and
in response to the screen reader (27) being enabled:
(i) performing disabling of function keys, included in a UI screen (1000) for executing processes, corresponding to functions that do not support the screen reader (27) whereby the user cannot select the disabled function keys, and
(ii) performing no disabling of function keys corresponding to functions that do support the screen reader (27).

11. A computer readable data carrier comprising instructions which, when executed by a computer (200), cause the computer (200) to carry out the method of claim 10.

## Patentansprüche

1. Informationsverarbeitungsvorrichtung (20) zum Steuern eines Bildschirmlesers (27), wobei der Bildschirmleser (27) funktionsfähig ist, Textinformationen, die laut zu lesen sind, in Sprachinformationen umzuwandeln und zu bewirken, dass eine Sprachausgabeeinheit (208) die Sprachinformationen als Sprache ausgibt, umfassend:
eine Verwaltungsvorrichtung für persönliche Einstellungsinformationen (26), konfiguriert zum Verwalten von Benutzeridentifizierungsinformationen, die eine Benutzer identifizieren, und persönlichen Einstellungsinformationen, die eine persönliche Einstellung des Bildschirmlesers (27) für den Benutzer angeben, in Verbindung miteinander;
einen Eingabeempfänger (22), konfiguriert zum Empfangen von Benutzeridentifizierungsinformationen;
eine Einstellungssteuerung (25), konfiguriert zum Aktivieren oder Deaktivieren des Bildschirmlesers (27) in Abhängigkeit von persönlichen Einstellungsinformationen, in Verbindung mit den Benutzeridentifizierungsinformationen, die empfangen werden, wobei Aktivieren oder Deaktivieren des Bildschirmlesers (27) einer Einstellung entspricht, in der der Bildschirmleser (27) verwendet bzw. nicht verwendet wird,
und wobei die Einstellungssteuerung (25) eine Anwendung (A1, A2, A3,...) aktiviert, die durch den Bildschirmleser (27) laut zu lesen ist, und
wenn die Einstellungssteuerung (25) den Bildschirmleser (27) aktiviert oder deaktiviert, die Einstellungssteuerung (25) die Anwendung (A1, A2, A3,...) über Informationen benachrichtigt, die angeben, ob der Bildschirmleser (27) aktiviert oder deaktiviert ist,
wobei als Reaktion auf die Benachrichtigung von Informationen, die angeben, dass der Bildschirmleser (27) aktiviert ist, eine Funktionseinschränkung an der Anwendung (A1, A2, A3,...) ausgeführt wird, wodurch die Operation der Anwendung (A1, A2, A3,...) teilweise eingeschränkt ist, und
als Reaktion auf die Benachrichtigung von Informationen, die angeben, dass der Bildschirmleser (27) deaktiviert ist, die Funktionseinschränkung an der Anwendung (A1, A2, A3,...) aufgehoben wird;
und
ein UI-Bildschirm (1000), umfassend Funktionstasten zum Ausführen von Prozessen, wobei als Reaktion darauf, dass der Bildschirmleser (27) aktiviert ist:
(i) Funktionstasten, die Funktionen entsprechen, die den Bildschirmleser (27) nicht unterstützen, deaktiviert werden, wodurch der Benutzer die deaktivierten Funktionstasten nicht auswählen kann; und
(ii) Funktionstasten, die Funktionen entsprechen, die den Bildschirmleser (27) unterstützen, nicht deaktiviert werden.

2. Informationsverarbeitungsvorrichtung (20) nach Anspruch 1,
wobei, wenn die Einstellungssteuerung (25) von dem Bildschirmleser (27) Informationen detektiert, die eine Pause des lauten Lesens angeben, die Einstellungssteuerung (25) ferner die Anwendung (A1, A2, A3,...) über Informationen benachrichtigt, die angeben, dass der Bildschirmleser (27) deaktiviert ist.

3. Informationsverarbeitungsvorrichtung (20) nach Anspruch 1,
wobei die Einstellungssteuerung (25) ferner den aktivierten oder deaktivierten Bildschirmleser (27) auf einen vorherigen Einstellungszustand zurücksetzt, bevor der Bildschirmleser (27) aktiviert oder deaktiviert wird.

4. Informationsverarbeitungsvorrichtung (20) nach Anspruch 3,
wobei, wenn die Einstellungssteuerung (25) den Bildschirmleser (27) auf einen vorherigen Einstellungszustand zurücksetzt, bevor der Bildschirmleser (27) aktiviert oder deaktiviert wird, die Einstellungssteuerung (25) die Anwendung (A1, A2, A3,...) über Informationen benachrichtigt, die den Einstellungszustand angeben.

5. Informationsverarbeitungsvorrichtung (20) nach einem der Ansprüche 1 bis 4,
wobei die Benutzeridentifizierungsinformationen zum Authentifizieren der Anmeldung des Benutzers verwendet werden.

6. Informationsverarbeitungsvorrichtung (20) nach einem der Ansprüche 1 bis 4,
wobei die persönlichen Einstellungsinformationen Informationen über die benutzte Sprache umfassen, die eine durch den Benutzer benutzte Sprache angeben, und
wenn die Einstellungssteuerung (25) den Bildschirmleser (27) aktiviert, die Einstellungssteuerung (25) eine Text-zu-Sprache-Engine für die Sprache die den Informationen über die benutzte Sprache des Benutzers entspricht unter Text-zu-Sprache-Engines, die in dem Bildschirmleser (27) eingeschlossen sind, spezifiziert.

7. Informationsverarbeitungsvorrichtung (20) nach einem der Ansprüche 1 bis 4, ferner umfassend:
die Sprachausgabeeinheit (208), konfiguriert zum Ausgeben von Sprachinformationen, die durch den Bildschirmleser (27) zu einem Kopfhörer laut zu lesen sind.

8. Informationsverarbeitungsvorrichtung (20) nach einem der Ansprüche 1 bis 7, ferner umfassend:
eine Datenbank (DB) zum Speichern der Benutzeridentifizierungsinformationen, die einen Benutzer identifizieren, und der persönlichen Einstellungsinformationen, die eine persönliche Einstellung des Bildschirmlesers (27) für den Benutzer angeben, in Verbindung miteinander.

9. Informationsverarbeitungssystem (1), umfassend:
die Informationsverarbeitungsvorrichtung (20) nach einem der Ansprüche 1 bis 8; und
eine Bildgebungsvorrichtung (30), die mit der Informationsverarbeitungsvorrichtung (20) kommunizieren kann und konfiguriert ist zum Durchführen von Bildgebung gemäß einer von der Informationsverarbeitungsvorrichtung (20) empfangenen Anweisung.

10. Informationsverarbeitungsverfahren, umfassend:
Verwalten von Benutzeridentifizierungsinformationen, die einen Benutzer identifizieren, und persönlichen Einstellungsinformationen, die eine persönliche Einstellung des Bildschirmlesers (27) für den Benutzer angeben, in Verbindung miteinander, wobei der Bildschirmleser (27) funktionsfähig ist zum Umwandeln von Textinformationen, die laut zu lesen sind, in Sprachinformationen und zum Bewirken, dass eine Sprachausgabeeinheit (208) die Sprachinformationen als Sprache ausgibt;
Empfangen von Benutzeridentifizierungsinformationen;
Bestimmen, durch eine Einstellungssteuerung (25), ob der Bildschirmleser (27) zu aktivieren oder zu deaktivieren ist in Abhängigkeit von persönlichen Einstellungsinformationen, in Verbindung mit den Benutzeridentifizierungsinformationen, die empfangen werden, wobei Aktivieren oder Deaktivieren des Bildschirmlesers (27) einer Einstellung entspricht, in der der Bildschirmleser (27) verwendet bzw. nicht verwendet wird,
und wobei die Einstellungssteuerung (25) eine Anwendung (A1, A2, A3,...) aktiviert, die durch den Bildschirmleser (27) laut zu lesen ist, und
wenn die Einstellungssteuerung (25) den Bildschirmleser (27) aktiviert oder deaktiviert, die Einstellungssteuerung (25) die Anwendung (A1, A2, A3,...) über Informationen benachrichtigt, die angeben, ob der Bildschirmleser (27) aktiviert oder deaktiviert ist,
wobei als Reaktion auf die Benachrichtigung von Informationen, die angeben, dass der Bildschirmleser (27) aktiviert ist, eine Funktionseinschränkung an der Anwendung (A1, A2, A3,...) ausgeführt wird, wodurch die Operation der Anwendung (A1, A2, A3,...) teilweise eingeschränkt ist, und
als Reaktion auf die Benachrichtigung von Informationen, die angeben, dass der Bildschirmleser (27) deaktiviert ist, die Funktionseinschränkung an der Anwendung (A1, A2, A3,...) aufgehoben wird; und
als Reaktion darauf, dass der Bildschirmleser (27) aktiviert ist:
(i) Durchführen von Deaktivieren von Funktionstasten, die in einem UI-Bildschirm (1000) zum Ausführen von Prozessen eingeschlossen sind, die Funktionen entsprechen, die den Bildschirmleser (27) nicht unterstützen, wodurch der Benutzer die deaktivierten Funktionstasten nicht auswählen kann, und
(ii) kein Durchführen von Deaktivieren von Funktionstasten, die Funktionen entsprechen, die den Bildschirmleser (27) unterstützen.

11. Computerlesbarer Datenträger, der Anweisungen umfasst, die, wenn sie durch einen Computer (200) ausgeführt werden, bewirken, dass der Computer (200) das Verfahren nach Anspruch 10 ausführt.

## Revendications

1. Appareil de traitement d'informations (20) pour commander un lecteur d'écran (27), dans lequel le lecteur d'écran (27) est fonctionnel pour convertir des informations de texte à lire à haute voix en informations de parole, et pour amener une unité de sortie de parole (208) à délivrer en sortie les informations de parole sous forme de parole, comprenant :
un gestionnaire d'informations de réglage personnelles (26) configuré pour gérer des informations d'identification d'utilisateur identifiant un utilisateur et des informations de réglage personnelles indiquant un réglage personnel du lecteur d'écran (27) pour l'utilisateur, en association les unes avec les autres ;
un récepteur d'entrée (22) configuré pour recevoir des informations d'identification d'utilisateur ;
un dispositif de commande de réglage (25) configuré pour activer ou désactiver le lecteur d'écran (27) suivant les informations de réglage personnel associées aux informations d'identification d'utilisateur qui sont reçues, dans lequel l'activation ou la désactivation du lecteur d'écran (27) correspondent à un réglage dans lequel le lecteur d'écran (27) est utilisé ou n'est pas utilisé, respectivement,
et dans lequel le dispositif de commande de réglage (25) active une application (A1, A2, A3,...) pour lecture à haute voix par le lecteur d'écran (27), et
lorsque le dispositif de commande de réglage (25) active ou désactive le lecteur d'écran (27), le dispositif de commande de réglage (25) notifie à l'application (A1, A2, A3,...) des informations indiquant si le lecteur d'écran (27) est activé ou désactivé,
dans lequel, en réponse à la notification d'informations indiquant que le lecteur d'écran (27) est activé, une restriction de fonction est exécutée sur l'application (A1, A2, A3,...), dans lequel le fonctionnement de l'application (A1, A2, A3,...) est partiellement restreint, et
en réponse à la notification d'informations indiquant que le lecteur d'écran (27) est désactivé, la restriction de fonction est annulée depuis l'application (A1, A2, A3,...) ;
et
un écran d'interface utilisateur (UI) (1000) comprenant des touches de fonction pour exécuter des processus, dans lequel, en réponse au lecteur d'écran (27) étant activé :
(i) les touches de fonction correspondant à des fonctions qui ne prennent pas en charge le lecteur d'écran (27) sont désactivées, de sorte que l'utilisateur ne peut pas sélectionner les touches de fonction désactivées ; et
(ii) les touches de fonction correspondant à des fonctions qui prennent en charge le lecteur d'écran (27) ne sont pas désactivées.

2. Appareil de traitement d'informations (20) selon la revendication 1,
dans lequel, lorsque le dispositif de commande de réglage (25) détecte, à partir du lecteur d'écran (27), des informations indiquant une pause de la lecture à haute voix, le dispositif de commande de réglage (25) notifie en outre l'application (A1, A2, A3,...) d' informations indiquant que le lecteur d'écran (27) est désactivé.

3. Appareil de traitement d'informations (20) selon la revendication 1,
dans lequel le dispositif de commande de réglage (25) ramène en outre le lecteur d'écran activé ou désactivé (27) à un état de réglage précédent avant que le lecteur d'écran (27) soit activé ou désactivé.

4. Appareil de traitement d'informations (20) selon la revendication 3,
dans lequel, lorsque le dispositif de commande de réglage (25) retourne le lecteur d'écran (27) à l'état de réglage précédent avant que le lecteur d'écran (27) soit activé ou désactivé, le dispositif de commande de réglage (25) notifie à l'application (A1, A2, A3,...) des informations indiquant l'état de réglage.

5. Appareil de traitement d'informations (20) selon l'une quelconque des revendications 1 à 4,
dans lequel les informations d'identification d'utilisateur sont utilisées pour authentifier la connexion de l'utilisateur.

6. Appareil de traitement d'informations (20) selon l'une quelconque des revendications 1 à 4,
dans lequel les informations de réglage personnel comprennent des informations de langue utilisée indiquant une langue utilisée par l'utilisateur, et
lorsque le dispositif de commande de réglage (25) active le lecteur d'écran (27), le dispositif de commande de réglage (25) spécifie un moteur texte-parole pour la langue correspondant aux informations de langue utilisée de l'utilisateur parmi les moteurs texte-parole inclus dans le lecteur d'écran (27).

7. Appareil de traitement d'informations (20) selon l'une quelconque des revendications 1 à 4, comprenant en outre :
l'unité de sortie de parole (208) configurée pour délivrer en sortie des informations de parole à lire à haute voix par le lecteur d'écran (27) vers des écouteurs.

8. Appareil de traitement d'informations (20) selon l'une quelconque des revendications 1 à 7, comprenant en outre :
une base de données (DB) pour stocker les informations d'identification d'utilisateur identifiant un utilisateur et les informations de réglage personnel indiquant un réglage personnel du lecteur d'écran (27) pour l'utilisateur, en association les unes avec les autres.

9. Système de traitement d'informations (1), comprenant :
l'appareil de traitement d'informations (20) selon l'une quelconque des revendications 1 à 8 ; et un appareil de formation d'image (30) pouvant communiquer avec l'appareil de traitement d'informations (20) et configuré pour effectuer une formation d'image conformément à une instruction reçue depuis l'appareil de traitement d'informations (20).

10. Procédé de traitement d'informations comprenant :
la gestion d'informations d'identification d'utilisateur identifiant un utilisateur et des informations de réglage personnel indiquant un réglage personnel du lecteur d'écran (27) pour l'utilisateur, en association les unes avec les autres, dans lequel le lecteur d'écran (27) est fonctionnel pour convertir des informations de texte à lire à haute voix en informations de parole, et pour amener une unité de sortie de parole (208) à délivrer en sortie les informations de parole sous forme de parole ;
la réception d'informations d'identification d'utilisateur ;
la détermination, par un dispositif de commande de réglage (25), s'il faut activer ou désactiver le lecteur d'écran (27) suivant les informations de réglage personnelles associées aux informations d'identification d'utilisateur qui sont reçues, dans lequel l'activation ou la désactivation du lecteur d'écran (27) correspond à un réglage dans lequel le lecteur d'écran (27) est utilisé ou n'est pas utilisé, respectivement,
et dans lequel le dispositif de commande de réglage (25) active une application (A1, A2, A3,...) pour lecture à haute voix par le lecteur d'écran (27), et
lorsque le dispositif de commande de réglage (25) active ou désactive le lecteur d'écran (27), le dispositif de commande de réglage (25) notifie à l'application (A1, A2, A3,...) des informations indiquant si le lecteur d'écran (27) est activé ou désactivé,
dans lequel, en réponse à la notification d'informations indiquant que le lecteur d'écran (27) est activé, une restriction de fonction est exécutée sur l'application (A1, A2, A3,...), dans lequel le fonctionnement de l'application (A1, A2, A3,...) est partiellement restreint, et
en réponse à la notification d'informations indiquant que le lecteur d'écran (27) est désactivé, la restriction de fonction est annulée depuis l'application (A1, A2, A3,...) ; et
en réponse au lecteur d'écran (27) étant activé :
(i) l'exécution de la désactivation de touches de fonction, incluses dans un écran UI (1000) pour exécuter des processus, correspondant à des fonctions qui ne prennent pas en charge le lecteur d'écran (27) de sorte que l'utilisateur ne peut pas sélectionner les touches de fonction désactivées, et
(ii) aucune exécution de désactivation de touches de fonction correspondant à des fonctions qui prennent en charge le lecteur d'écran (27).

11. Support de données lisible par ordinateur comprenant des instructions qui, lorsqu'elles sont exécutées par un ordinateur (200), amènent l'ordinateur (200) à conduire le procédé selon la revendication 10.
